(19) Europäisches Patentamt
European Patent Office
Office européen des brevets

(11) **EP 2 129 046 A1**

(12) **EUROPEAN PATENT APPLICATION**
published in accordance with Art. 153(4) EPC

(43) Date of publication:
**02.12.2009 Bulletin 2009/49**

(51) Int Cl.:
***H04L 12/28*** *(2006.01)*

(21) Application number: **08710589.6**

(22) Date of filing: **25.01.2008**

(86) International application number:
**PCT/JP2008/051088**

(87) International publication number:
**WO 2008/090980 (31.07.2008 Gazette 2008/31)**

(84) Designated Contracting States:
**AT BE BG CH CY CZ DE DK EE ES FI FR GB GR HR HU IE IS IT LI LT LU LV MC MT NL NO PL PT RO SE SI SK TR**

(30) Priority: **25.01.2007 JP 2007014851**

(71) Applicant: **Panasonic Corporation
Kadoma-shi
Osaka 571-8501 (JP)**

(72) Inventors:
• **SAKIMURA, Toshio
Osaka-shi, Osaka 540-6207 (JP)**

• **FUNABIKI, Makoto
Osaka-shi, Osaka 540-6207 (JP)**
• **TATSUTA, Akihiro
Osaka-shi, Osaka 540-6207 (JP)**
• **OHUE, Hiroshi
Osaka-shi, Osaka 540-6207 (JP)**

(74) Representative: **Eisenführ, Speiser & Partner
Johannes-Brahms-Platz 1
20355 Hamburg (DE)**

(54) **PACKET ROUND TRIP TIME MEASURING METHOD**

(57) When a source device (10) measures a packet round trip time RTT from the source device (10) to a sink device (20), a band management unit (28) allocates a reservation period (CTBt) for transmitting an RTT test command from the source device (10) to the sink device (20) and a reservation period (CTBr) for transmitting an RTT response setting request command from the sink device (20) to the source device (10) within a super frame period. At a start timing of the reservation period (CTBt), a controller (13) transmits the RTT test command and starts measuring the RTT. Upon receiving the RTT response setting request command, the controller (13) finishes measuring the RTT.

Fig.6

**Description**

TECHNICAL FIELD

The present invention relates to a method of measuring a packet Round Trip Time (referred to as an RTT hereinafter), and a wireless communication system using the method. In particular, the present invention relates to a method of measuring, for example, an RTT between a source device and a sink device of audiovisual devices (referred to as AV devices hereinafter) in a wireless communication system for transmitting content data to be copyrighted, in a form of packet data, and a communication system using the method.

BACKGROUND ART

Digital infrastructures (network infrastructures) have been constructed by using digital broadcasting, high-speed Internet and the like. At the same time, large-capacity recording media such as a DVD and a BD have become widespread. Therefore, anyone can easily obtain digital contents without any deterioration via the network. In this situation, copyright protection method is quite important. The application range of DTCP (Digital Transmission Content Protection) standard for protecting copyright of contents on the network has been particularly enlarged to IEEE1394, USB (Universal Serial Bus), MOST (Media Oriented Systems Transport), Bluetooth, and Internet Protocols (IP), and the number of products compliant with the DTCP has already increased.

In DTCP-IP (See Non-Patent Document 1), any connection between an in-house network and an external network via a router is not permitted, and a range of connection between a source device transmitting content data and a sink device receiving the content data is restricted. Namely, a packet round trip time RTT between the source device and the sink device is measured, and only when the RTT is ranged within a restricted time period (7milliseconds, for example), the source device authenticates the sink device and can transmit data to the sink device. In the Non-Patent Document 1, there is defined a method of determining a device to be connected and a method of key exchange based on an Authentication and Key Exchange (referred to as an AKE hereinafter).

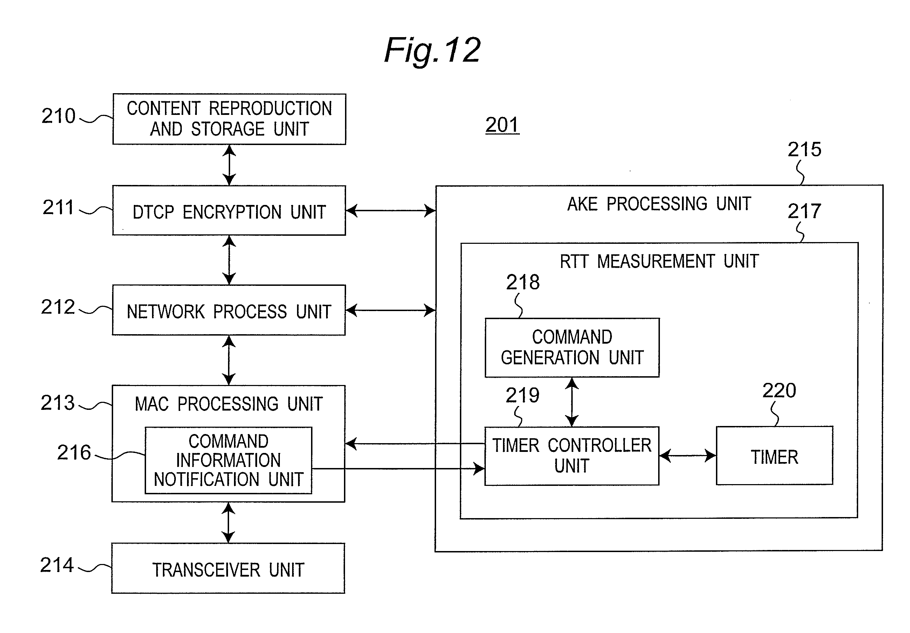

Patent Document 1 discloses a packet round trip time measuring program according to a prior art. Fig. 12 is a block diagram showing a configuration of a source device 201 which uses the packet round trip time measuring program according to the prior art. Referring to Fig. 12, an RTT measurement unit 217 generates an RTT measurement command, and measures an RTT. An MAC processing unit 213 acquires a transmission band, and further transmits the RTT measurement command as a packet in the acquired transmission band. A command information notification unit 216 generates command information, which is referred to during the measurement of the RTT, based on a timing when the MAC processing unit 213 transmits the packet, and notifies the RTT measurement unit 217 of the command information. The MAC processing unit 213 and the RTT measurement unit 217 work together via the command information notification unit 216 as described-above, and therefore, transmission delay time added to the RTT can be reduced and the RTT can be measured accurately.

Patent Document 1: Japanese patent laid-open publication No. JP-2006-270248-A.

Non-Patent Document 1: DTCP Volume 1, Supplement E, Mapping DTCP to IP, (Information Version), Hitachi, Ltd. et al., Revision 1.1, February 28, 2005.

DISCLOSURE OF THE INVENTION

PROBLEMS TO BE SOLVED BY THE INVENTION

In the packet round trip time measuring program according to the prior art, it is assumed that the RTT is measured in a communication system which uses a communication protocol compliant with the IEEE802.11 standard for wireless LANs (Local Area Networks). The source device 201 of Fig. 12 transmits video data compressed using a compression method such as MPEG-2. In this case, for example, when high-definition data of 1080/60i system is transmitted, a data transfer rate is about 24 Mbps.

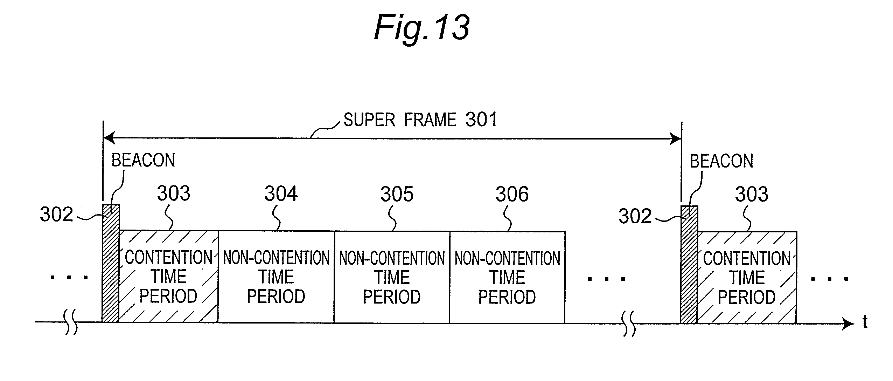

However, in a wireless communication system for transmitting uncompressed video content data in a form of packet data, when the high-definition data of 1080/60i system is transmitted, the data transfer rate reaches about 1.5 Gbps, and when video data of 1080/60p system is transmitted, the transfer rate reaches about 3 Gbps. Accordingly, during the RTT measurement in the wireless communication system, problems will occur which will be described below with reference to Fig. 13.

Fig. 13 is a timing chart showing an example of a configuration of a Medium Access Control (referred to as a MAC hereinafter) frame according to the prior art used in the wireless communication system for transmitting uncompressed video content data in the form of the packet data. Referring to Fig. 13, the MAC frame has a frame format called a super frame. Each super frame 301 includes, in an order from the head of the super frame, a beacon 302 which is a time period (time interval) for transmitting a beacon signal, one contention time period 303 which is a time period in which all of the devices in the wireless communication system can transmit signals, and a plurality of non-contention time periods 304 to 306 that are a plurality of time periods for transmitting video and audio wideband data. Upon transmitting uncompressed video content data to another device in the form of the packet data, a transmitter station in the wireless communication system reserves some of the non-contention time periods 304 to 306 previously. In this case, a bandwidth of each of the non-contention time periods 304 to 306 can be changed based on an amount of data to be transmitted. In addition, before all of the non-contention time periods 304 to 306 are reserved, an arbitrary transmitter station in the wireless communication system can reserve unreserved non-contention time periods 304 to 306. For example, a transmitter station "A" may reserve the non-contention time period 304, and a transmitter station "B" may reserve the non-contention time periods 305 and 306.

Referring to Fig. 13, as the amount of uncompressed video data transmitted in each of the non-contention time periods 304 to 306 increases, the bandwidth of each of the non-contention time periods 304 to 306 increases, and finally, about 99% of the super frame 301 will be reserved. In this case, there is such a possibility that the MAC processing unit 213 of Fig. 12 according to the prior art cannot reserve the transmission band for transmitting the RTT measurement command in the super frame and cannot measure the RTT.

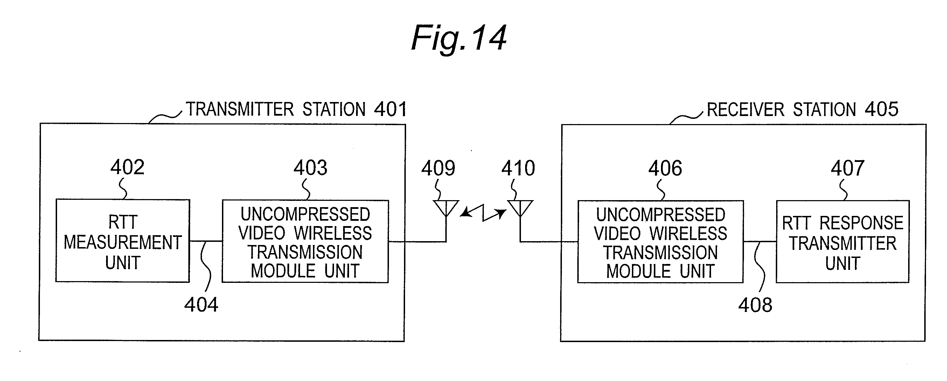

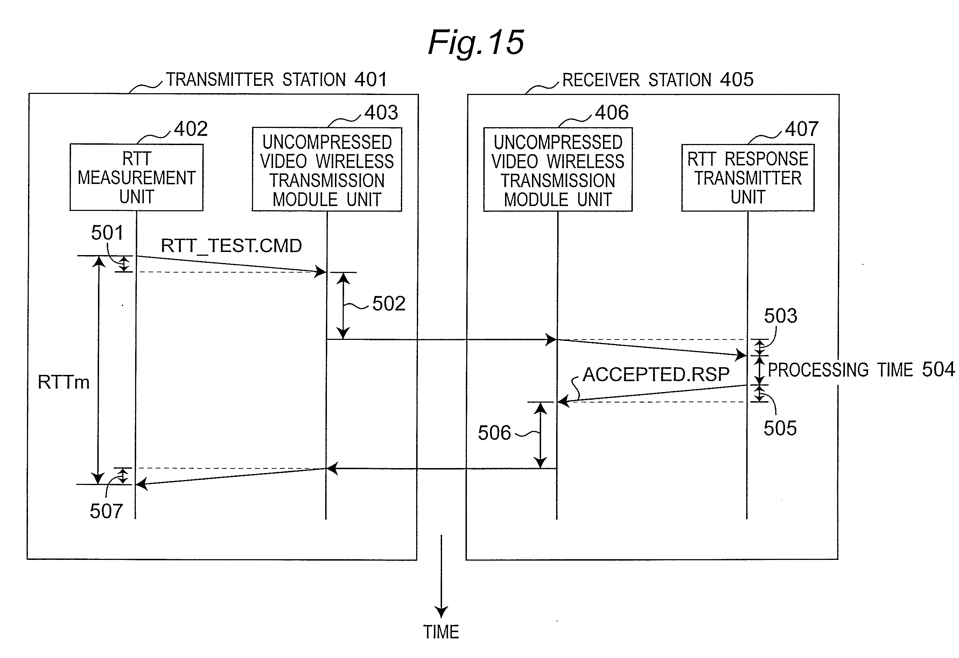

With reference to Figs. 14 to 15, there will be described an RTT measuring method of measuring the RTT according to the prior art using, for example, the contention time period 303 of Fig. 13, and problems of the RTT measuring method. Fig. 14 is a block diagram showing a configuration of a wireless communication system which uses a method of measuring the RTT according to the prior art, and Fig. 15 is a sequence diagram showing the method of measuring the RTT of Fig. 14.

The wireless communication system of Fig. 14 includes a transmitter station 401 and a receiver station 405 connected to each other via a wireless communication line. The transmitter station 401 is a DTCP source device for wirelessly transmitting video content data which is to be copyrighted and which has been encrypted using the DTCP, to the receiver station 405. The receiver station 405 is a DTCP sink device for receiving the video content data.

Referring to Fig. 14, the transmitter station 401 includes an RTT measurement unit 402, an uncompressed video wireless transmission module unit 403, an internal communication transmission line 404 for connecting the RTT measurement unit 402 to the uncompressed video wireless transmission module unit 403, and an antenna 409. In addition, the receiver station 405 includes an uncompressed video wireless transmission module unit 406, an RTT response transmitter unit 407, an internal communication transmission line 408 for connecting the uncompressed video wireless transmission module unit 406 to the RTT response transmitter unit 407, and an antenna 410. In this case, each of the transmission lines 404 and 408 is a bus such as an I2C (Inter Integrated Circuit) for communication in the devices.

Referring to Fig. 14, the RTT measurement unit 402 of the transmitter station 401 starts an AKE operation defined in the DTCP with the RTT response transmitter unit 407 of the receiver station 405. When the operation in a Challenge-Response portion defined in the AKE operation is completed, the RTT measurement unit 402 measures RTT in a manner described in detail with reference to Fig. 15.

Referring to Fig. 15, the RTT measurement unit 402 generates an RTT test command (RTT_TEST.CMD), and transmits the RTT test command to the uncompressed video wireless transmission module 403 via the transmission line 404. In this case, the transmission of the RTT test command is delayed by delay time 501 caused by the transmission line 404 and an interface process performed by a communication interface. Next, the uncompressed video wireless transmission module 403 modulates a wireless carrier signal according to a signal including the received RTT test command, waits the waiting time 502 for the next contention period (time interval) 303 (See Fig. 14) in the super frame 301, and thereafter, wirelessly transmits the modulated wireless signal toward the antenna 410 of the receiver station 405 via the antenna 409 in the contention period 303.

Further, in Fig. 15, the wireless signal transmitted from the transmitter station 401 is received by the antenna 410, and thereafter, is inputted to the uncompressed video wireless transmission module unit 406. After demodulating the wireless signal into a digital signal, the uncompressed video wireless transmission module unit 406 extracts the RTT test command from the digital signal. The uncompressed video wireless transmission module unit 406 transmits the extracted RTT test command to the RTT response transmitter unit 407 via the transmission line 408. In this case, transmission of the RTT test command is delayed by delay time 503 caused by the transmission line 408 and an interface process performed by a communication interface. Upon receiving the RTT test command, the RTT response transmitter unit 403 performs a predetermined process which requires predetermined processing time 504 to generate an accepted response (ACCEPTED.RSP) command, and transmits the accepted response command to the uncompressed video wireless transmission module unit 406. In this case, transmission of the accepted response command is delayed by delay time 505 caused by the transmission line 408 and the interface process performed by the communication interface. The uncompressed video wireless transmission module unit 406 modulates a wireless carrier signal according to a signal including the received accepted response command, waits the waiting time 506 for the next contention period 303 (See Fig. 14) in the super frame 301, and thereafter, wirelessly transmits the modulated wireless signal toward the antenna 409 of the transmitter station 401 via the antenna 410 in the contention period 303.

The wireless signal transmitted from the receiver station 405 is received by the antenna 409, and thereafter, inputted to the uncompressed video wireless transmission module unit 403. After demodulating the wireless signal into a digital signal, the uncompressed video wireless transmission module unit 403 extracts the accepted response from the digital signal. The uncompressed video wireless transmission module unit 403 transmits the extracted accepted response command to the RTT measurement unit 402 via the transmission line 404. In this case, transmission of the accepted response command is delayed by delay time 507 caused by the transmission line 404 and the interface process performed by the communication interface.

It is to be noted that a packet of the RTT test command stores higher 80 bits of a hash value of a Kauth (authentication key) previously shared between the transmitter station 401 of a source device and the receiver station 405 of a sink device derived using SHA (Secure Hash Algorithm)-1. In this case, the hash value is a hash value of a sum of MK and a trial number N of the RTT measurement derived using the SHA. In addition, lower 80 bits of the hash value are stored in a packet of the accepted response. Namely, a data length of each of the RTT test command and the accepted response command is equal to 10 bytes.

In this case, in the DTCP, the RTT to be measured is defined as a time period from a timing when the source device transmits the RTT test command to the sink device to a timing when the source device receives an accepted response command from the sink device, which transmits the accepted response command to the source device after receiving the RTT test command (See Fig. 4 on page 26 of the Non-Patent Document 1).

Referring to Fig. 15, a time period RTTm measured by the RTT measurement unit 402 as the RTT is a time period from a timing when the RTT measurement unit 402 transmits the RTT test command to a timing when the RTT measurement unit 402 receives the accepted response command. In addition to the RTT defined by the DTCP, the time period RTTm includes the delay time 501, 503, 505 and 507, the waiting time 502 and 506, and the processing time 504 as transmission delay time. Accordingly, the time period RTTm measured by the RTT measurement unit 402 is longer than the RTT defined by the DTCP, and there is such a possibility that the time period RTTm exceeds, for example, 7 milliseconds. In this case, the transmitter station 401 does not authenticate the receiver station 405. Therefore, according to the RTT measuring method according to the prior art, there is such a possibility that the transmitter station 401 determines that the receiver station 405 is a device installed outside of a house although the receiver station 405 is installed in the house, and the transmitter station 401 cannot transmit content data.

It is an object of the present invention to provide a method of measuring the RTT and a wireless communication system using the same, each capable of solving the above-mentioned problems and measuring an RTT between a source device and a sink device surely and accurately as compared with the prior art.

MEANS FOR SOLVING THE PROBLEMS

According to a first aspect view of the invention, there is provided a method of measuring a packet round trip time RTT for a wireless communication system for wirelessly transmitting content data from a source device to a sink device in a form of packets. The wireless communication system includes band management means for performing band management for wireless transmission of the packets. The source device includes first controller means for controlling wireless communication with the sink device. When the first controller means measures a packet round trip time RTT to the sink device, the first controller transmits a band width request command signal for requesting allocation of bands for round trip packets to the band management means. In response to the band width request command signal, within a predetermined frame period, the band management means allocates a first reservation period for transmitting a first packet from the source device to the sink device and a second reservation period for sending back a second packet from the sink device to the source device, and notifies the first controller means of the first reservation period and the second reservation period. The first controller means transmits the first packet and starts measuring the packet round trip time RTT at a first timing, which is a start timing of the first reservation period, finishes measuring the packet round trip time RTT at a second timing when the first controller receives the second packet, and calculates the packet round trip time RTT based on a time difference between the first timing and the second timing.

In the above-mentioned method of measuring the packet round trip time RTT, the band management means preferably allocates a third reservation period and a fourth reservation period for transmitting the content data within the frame period, and allocates the first reservation period and the second reservation period between the third reservation period and the fourth reservation period so that the second reservation period is subsequent to the first reservation period.

In addition, in the above-mentioned method of measuring the packet round trip time RTT the band management means preferably previously retains a predetermined time period for allocating the first reservation period and the second reservation period therein within the frame period, and allocates the first reservation period and the second reservation period into the predetermined time period so that the second reservation period is subsequent to the first reservation period.

Further, in the above-mentioned method of measuring the packet round trip time RTT the band management means preferably allocates a third reservation period and a fourth reservation period for transmitting the content data before and after the predetermined time period, respectively.

Still further, in the above-mentioned method of measuring the packet round trip time RTT, after finishing measuring the packet round trip time RTT, the first controller means preferably transmits a band release request command signal for requesting release of the first reservation period and the second reservation period to the band management means, and, in response to the band release request command signal, the band management means releases the first reservation period and the second reservation period, and retains the released first and second reservation periods for measurement of a packet round trip time RTT between the other devices in the wireless communication system.

In addition, in the above-mentioned method of measuring the packet round trip time RTT as claimed, the sink device preferably includes second controller means for controlling the wireless communication with the source device, and, in response to the first packet from the source device, the second controller means transmits the second packet to the first controller means.

Further, in the above-mentioned method of measuring the packet round trip time RTT the second controller means preferably generates the second packet before the sink device receives the first packet from the source device.

Still further, in the method of above-mentioned measuring the packet round trip time RTT the source device preferably further includes third controller means for performing a predetermined copyright protection process on the content data, the third controller means transmits an RTT measurement request command signal for requesting start of measurement of the packet round trip time RTT to the sink device to the first controller means, and, in response to the RTT measurement request command signal, the first controller means transmits the bandwidth request command signal to the band management means.

In addition, in the above-mentioned method of measuring the packet round trip time RTT the sink device preferably further includes fourth controller means for performing a predetermined copyright protection process on the content data, the fourth controller means transmits an RTT response setting request command signal for requesting generation of the second packet to the second controller means, and, in response to the RTT response setting request command signal, the second controller means generates the second packet.

According to a second aspect view of the present invention, there is provided a wireless communication system for wirelessly transmitting content data from a source device to a sink device in a form of packets. The wireless communication system includes band management means for performing band management for the wireless transmission of the packets. The source device includes first controller means for controlling wireless communication with the sink device. When the first controller means measures a packet round trip time RTT to the sink device, the first controller transmits a band width request command signal for requesting allocation of bands for round trip packets to the band management means. In response to the band width request command signal, within a predetermined frame period, the band management means allocates a first reservation period for transmitting a first packet from the source device to the sink device and a second reservation period for sending back a second packet from the sink device to the source device, and notifies the first controller means of the first reservation period and the second reservation period. The first controller means transmits the first packet and starts measuring the packet round trip time RTT at a first timing, which is a start timing of the first reservation period, finishes measuring the packet round trip time RTT at a second timing when the first controller receives the second packet, and calculates the packet round trip time RTT based on a time difference between the first timing and the second timing.

In the above-mentioned wireless communication system, the band management means preferably allocates a third reservation period and a fourth reservation period for transmitting the content data within the frame period, and allocates the first reservation period and the second reservation period between the third reservation period and the fourth reservation period so that the second reservation period is subsequent to the first reservation period.

In addition, in the above-mentioned wireless communication system, the band management means preferably previously retains a predetermined time period for allocating the first reservation period and the second reservation period therein within the frame period, and allocates the first reservation period and the second reservation period into the predetermined time period so that the second reservation period is subsequent to the first reservation period.

Further, in the above-mentioned wireless communication system, the band management means preferably allocates a third reservation period and a fourth reservation period for transmitting the content data before and after the predetermined time period, respectively.

Still further, in the above-mentioned wireless communication system, after finishing measuring the packet round trip time RTT, the first controller means preferably transmits a band release request command signal for requesting release of the first reservation period and the second reservation period to the band management means, in response to the band release request command signal, the band management means releases the first reservation period and the second reservation period, and retains the released first and second reservation periods for measurement of a packet round trip time RTT between the other devices in the wireless communication system.

In addition, in the above-mentioned wireless communication system, the sink device preferably includes second controller means for controlling the wireless communication with the source device, and, in response to the first packet from the source device, the second controller means transmits the second packet to the first controller means.

Further, in the above-mentioned wireless communication system, the second controller means preferably generates the second packet before the sink device receives the first packet from the source device.

Still further, in the above-mentioned wireless communication system, the source device preferably further includes third controller means for performing a predetermined copyright protection process on the content data, the third controller means transmits an RTT measurement request command signal for requesting start of measurement of the packet round trip time RTT to the sink device to the first controller means, and, in response to the RTT measurement request command signal, the first controller means transmits the bandwidth request command signal to the band management means.

In addition, in the wireless communication system, the sink device preferably further includes fourth controller means for performing a predetermined copyright protection process on the content data, the fourth controller means transmits an RTT response setting request command signal for requesting generation of the second packet to the second controller means, and, in response to the RTT response setting request command signal, the second controller means generates the second packet.

EFFECTS OF THE INVENTION

According to the method of measuring the RTT and the wireless communication system using the same according to the present invention, the source device includes first controller means for controlling a wireless communication with the sink device, and when the first controller means measures a packet round trip time RTT to the sink device, the first controller transmits a band width request command signal for requesting allocation of bands for round trip packets to the band management means. In response to this, within a predetermined frame period, the band management means allocates a first reservation period for transmitting a first packet from the source device to the sink device and a second reservation period for sending back a second packet from the sink device to the source device, and notifies the first controller means of the first reservation period and the second reservation period. The first controller means transmits the first packet and starts measuring the packet round trip time RTT at a first timing, which is a start timing of the first reservation period, finishes measuring the packet round trip time RTT at a second timing when the first controller receives the second packet, and calculates the packet round trip time RTT based on a time difference between the first timing and the second timing. Therefore, as compared with the prior art, it is possible to measure the packet round trip time RTT accurately and surely.

BRIEF DESCRIPTION OF THE DRAWINGS

Fig. 1 is a block diagram showing a configuration of a wireless communication system for measuring an RTT using a method of measuring the RTT according to a first embodiment of the present invention.

Fig. 2 is a sequence diagram showing outline of a message sequence for the method of measuring the RTT according to the first embodiment of the present invention.

Fig. 3 is a table showing typical parameters for a bandwidth request command for RTT measurement according to the first embodiment of the present invention.

Fig. 4 is a timing chart showing an example of super frame scheduling using the parameters of Fig. 3.

Fig. 5 is a diagram showing a time length required for a reservation period CTBt for a packet of an RTT test command of Fig. 4, and a time length required for a reservation period CTBr for a packet of an RTT response command of Fig. 4.

Fig. 6 is a sequence diagram showing an example of a message sequence for the method of measuring the RTT according to the first embodiment of the present invention.

Fig. 7 is a block diagram showing a configuration of a wireless communication system for measuring the RTT using a method of measuring the RTT according to a second embodiment of the present invention.

Fig. 8 is a block diagram showing a configuration of a wireless communication system for measuring the RTT using a method of measuring the RTT according to a third embodiment of the present invention.

Fig. 9 is a block diagram showing a configuration of a wireless communication system for measuring the RTT using a method of measuring the RTT according to a fourth embodiment of the present invention.

Fig. 10 is a block diagram showing a configuration of a wireless communication system for measuring the RTT using a method of measuring the RTT according to a fifth embodiment of the present invention.

Fig. 11 is a sequence diagram showing an example of a message sequence for the method of measuring the RTT according to the fifth embodiment of the present invention.

Fig. 12 is a block diagram showing a configuration of a source device 201 which uses a packet round trip time measuring program according to a prior art.

Fig. 13 is a timing chart showing an example of a configuration of a MAC frame according to the prior art used in a wireless communication system for transmitting uncompressed video content data in a form of packet data.

Fig. 14 is a block diagram showing a configuration of a wireless communication system which uses a method of measuring the RTT according to the prior art.

Fig. 15 is a sequence diagram showing the method of measuring the RTT of Fig. 14.

DESCRIPTION OF REFERENCE SYMBOLS

| | |
|---|---|
| 10, 10A, 10B | Source device, |
| 11, 12, 13, 13A, 13B, 21, 21A, 21B, 22, 23, 31 | Controller, |
| 13t | Timer circuit, |
| 14 | Video and audio reproducing unit, |
| 15, 26 | AV signal processing circuit, |
| 15m, 26m | Buffer memory, |
| 16, 25, 32 | Wireless communication circuit, |
| 17, 24, 33 | Antenna apparatus, |
| 20, 20A, 20B | Sink device, |
| 27 ... | Display with loudspeaker, |
| 28 | Band management unit, |
| 30 | Coordinator device, |
| 601 | Transmitter station, |
| 602, 612 | DTCP command transceiver unit, |
| 603, 613 | Uncompressed video transmission wireless module unit, |
| 604 | RTT measurement unit, |
| 605, 615 | Antenna, |
| 611 | Receiver station, |
| 614 | RTT response transmitter unit, |
| CTBt | Reservation period for RTT test command, |
| CTBr | Reservation period for RTT response command, |
| TBav1, TBav2 | Reservation period for AV data, |
| TBb | Beacon period, |
| Tpre | Time period, and |
| RATB | Contention period. |

BEST MODE FOR CARRYING OUT THE INVENTION

Embodiments of the present invention will be described hereinafter with reference to the drawings. In the embodiments, components similar to each other are denoted by the same reference numerals.

FIRST EMBODIMENT

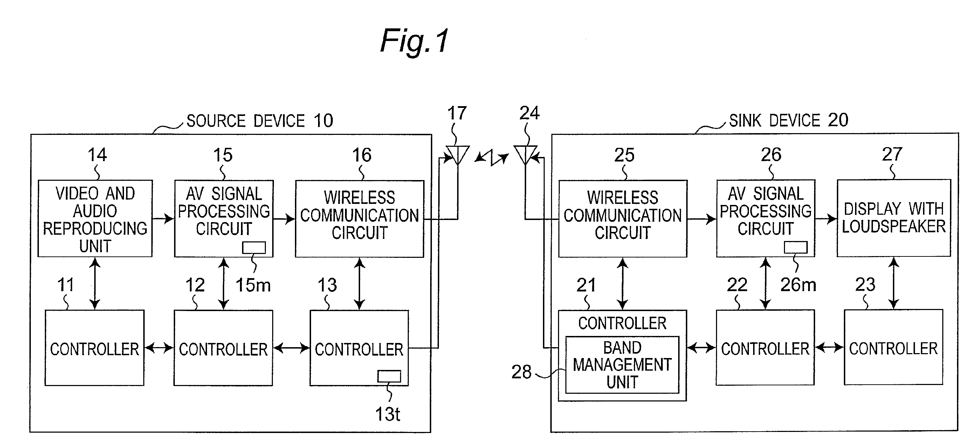

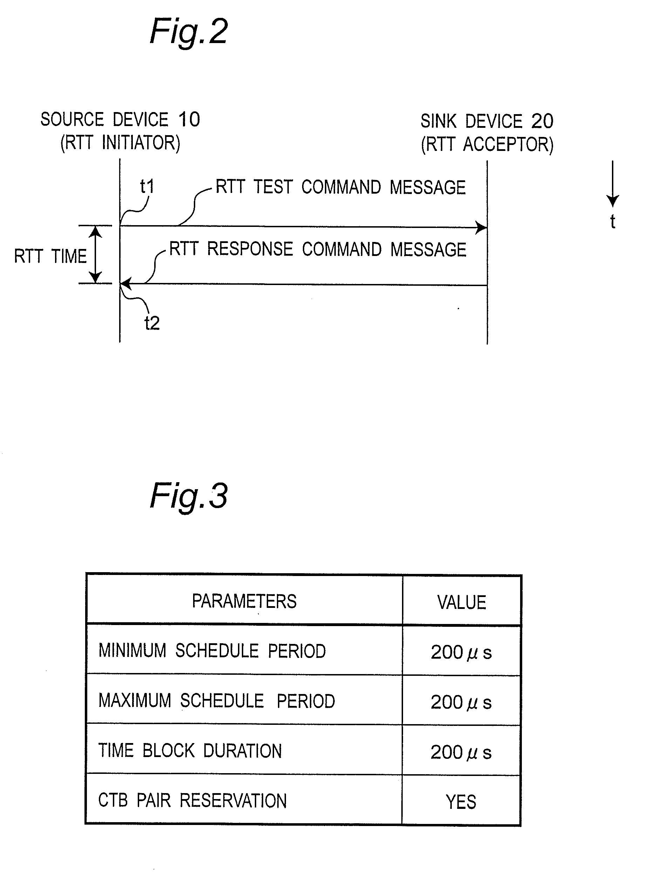

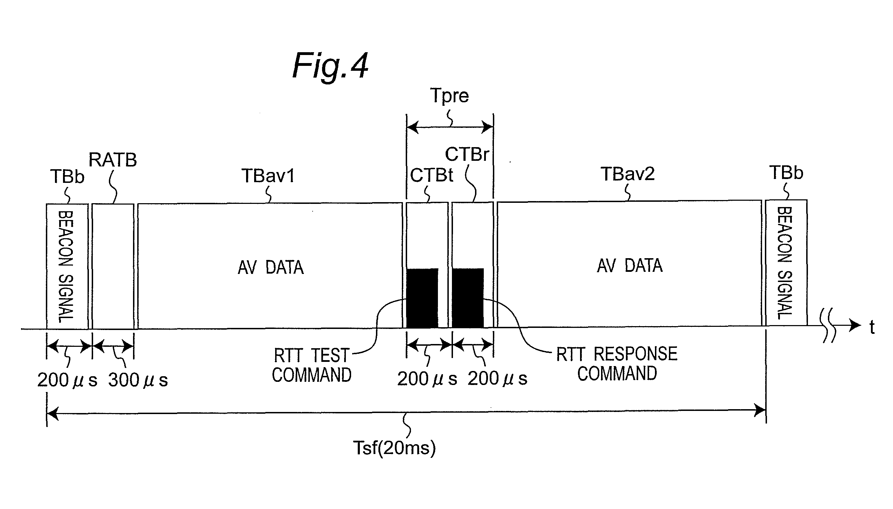

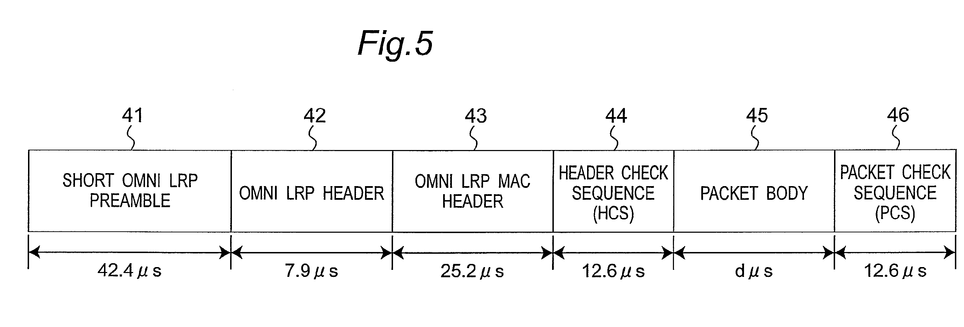

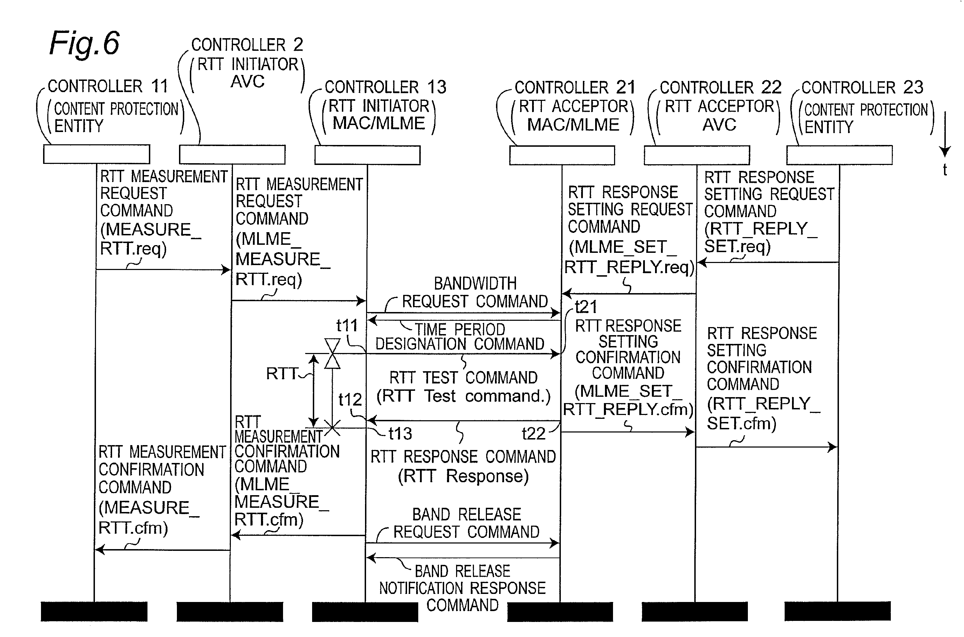

Fig. 1 is a block diagram showing a configuration of a wireless communication system for measuring an RTT using a method of measuring the RTT according to a first embodiment of the present invention, and Fig. 2 is a sequence diagram showing outline of a message sequence for the method of measuring the RTT according to the first embodiment of the present invention. In addition, Fig. 3 is a table showing typical parameters for a bandwidth request command for RTT measurement according to the first embodiment of the present invention, and Fig. 4 is a timing chart showing an example of super frame scheduling using the parameters of Fig. 3. Further, Fig. 5 is a diagram showing a time length required for a reservation period CTBt for a packet of an RTT test command of Fig. 4, and a time length required for a reservation period CTBr for a packet of an RTT response command of Fig. 4. Fig. 6 is sequence diagram showing an example of a message sequence for the method of measuring the RTT according to the first embodiment of the present invention.

The method of measuring the packet round trip time RTT and the wireless communication system using the same according to the first embodiment are characterized as follows. A source device 10 includes a controller 13 for controlling wireless communication with a sink device 20. When the controller 13 measures the packet round trip time RTT to the sink device 20, the controller 13 transmits a bandwidth request command signal for requesting allocation of bands for round trip packets to a band management unit 28. In response to this, within a super frame period, the band management unit 28 allocates a reservation period CTBt for transmitting a packet including the RTT test command from the source device 10 to the sink device 20 and a reservation period CTBr for transmitting back a packet including the RTT response command from the sink device 20 to the source device 10, and notifies the controller 13 of the reservation periods CTBt and CTBr. The controller 13 transmits the packet including the RTT test command and starts measuring the packet round trip time RTT at a first timing which is a start timing of the reservation period CTBt, finishes measuring the packet round trip time RTT at a second timing when the controller 13 receives the packet including the RTT response command, and calculates the packet round trip time RTT based on a time difference between the first and second timings.

First of all, there will be described below configurations of the source device 10 and the sink device 20 connected to each other via a wireless communication line of a wireless communication network of a wireless video area network (referred to as a WVAN hereinafter), and operations of the source device 10 and the sink device 20.

Referring to Figs. 1 and 6, the source device 10 includes a video and audio producing unit 14, a controller 11 (corresponding to a content protection entity) for controlling operation of the video and audio producing unit 14, an AV signal processing circuit 15 including a buffer memory 15m, a controller 12 (corresponding to an AV controller of an RTT initiator) for controlling operation of the AV signal processing circuit 15, a wireless communication circuit 16, an array antenna apparatus 17, and the controller 13 (corresponding to an MAC/MLME (MAC layer management entity) of the RTT initiator) for controlling operations of the wireless communication circuit 16 and the array antenna apparatus 17. In this case, the controller 13 includes a timer circuit 13t.

Referring to Fig. 1, the video and audio reproducing unit 14 is a Blu-ray disc player, for example, reproduces contents of content data including video and audio data from a recording medium such as a Blu-ray disc, and outputs the reproduced contents to the AV signal processing circuit 15. The controller 11 performs a copyright protection process according to the DTCP on the content data including the video and audio data. After performing a predetermined signal process such as an encryption process on the inputted video and audio data according to a predetermined control command such as a reproduction command from the controller 12, the AV signal processing circuit 15 outputs processed signals to the wireless communication circuit 16 via the buffer memory 15m.

In addition, in Fig. 1, the wireless communication circuit 16 converts the inputted video and audio data and predetermined control commands inputted from the controller 13 into a digital signal in a predetermined packet format, digitally modulates a wireless carrier signal according to the digital signal, and wirelessly transmits the modulated wireless signal to an array antenna apparatus 24 of the sink device 20 via the array antenna apparatus 17. Further, the wireless signal transmitted from the array antenna apparatus 24 of the sink device 20 is received by the array antenna apparatus 17, and thereafter, inputted to the wireless communication circuit 16. The wireless communication circuit 16 demodulates the received wireless signal into a digital signal, extracts predetermined control commands from the digital signal by a predetermined packet separation process, and outputs the predetermined control commands to the controller 13.

In this case, the array antenna apparatus 17 includes a plurality of antenna elements, a duplexer for separating transmitted and received signals, a plurality of phase shifters each shifting a phase of each of the received wireless signal and the wireless signal to be transmitted by a predetermined phase shifting amount, a signal combiner for combining a plurality of phase-shifted wireless signals, and a signal divider for dividing the wireless signal to be transmitted into a plurality of wireless signals. The array antenna apparatus 17 has a low-rate physical layer (referred to as an LRP hereinafter) mode of performing wireless communication using a 60 GHz-band. An index (identifier) of transmission mode of the LRP mode is 0. The LRP mode includes (a) an omni-directional transmission LRP mode (referred to as an omni LRP mode or an LRP omni-directional mode hereinafter), and (b) a directional transmission LRP mode (referred to as an LRP directional mode hereinafter). In the LRP omni-directional mode, the controller 13 transmits a wireless signal with controlling the respective phase shifters so as to direct a main beam of the array antenna apparatus 17 to eight predetermined directions sequentially. On the other hand, in the LRP directional mode, the controller 13 transmits a wireless signal with controlling the respective phase shifters so as to direct the main beam of the array antenna apparatus 17 to one predetermined direction.

Referring to Figs. 1 and 6, the sink device 20 includes the array antenna apparatus 24, a wireless communication circuit 25, a controller 21 (corresponding to an MAC/MLME of an RTT acceptor) for controlling operations of the wireless communication circuit 16 and the array antenna apparatus 24, an AV signal processing circuit 26 including a buffer memory 26m, a controller 22 (corresponding to an AV controller of the RTT acceptor) for controlling operation of the AV signal processing circuit 26, a display with loudspeaker 27, and a controller 23 (corresponding to a content protection entity) for controlling operation of the display with loudspeaker 27. It is to be noted that the controller 21 includes a band management unit 28 including a scheduler for performing band management for the wireless transmission in the wireless communication network.

Referring to Fig. 1, a wireless signal transmitted from the array antenna apparatus 17 of the source device 10 is received by the array antenna apparatus 24, and thereafter, inputted to the wireless communication circuit 25. The wireless communication circuit 25 demodulates the received wireless signal into a digital signal, extracts only video and audio data and predetermined control commands from the digital signal by the predetermined packet separation process, outputs the former data to the AV signal processing circuit 26, and outputs the latter control commands to the controller 21. The AV signal processing circuit 26 executes a predetermined signal process such as encryption and decoding on the inputted video and audio data, and outputs the processed video and audio data to the display with loudspeaker 27 via the buffer memory 26m so as to display video and output audio output. The controller 23 performs a copyright protection process according to the DTCP on the video and audio data. The controller 21 generates predetermined control commands, and outputs the predetermined control commands to the wireless communication circuit 25. The wireless communication circuit 25 converts the inputted control commands into a digital signal in the predetermined packet format, digitally modulates a wireless carrier signal according to the digital signal, and wirelessly transmits the modulated wireless signal to the array antenna apparatus 17 of the source device 10 via the array antenna apparatus 24. The array antenna apparatus 24 is configured in a manner similar to that of the array antenna apparatus 17. The controller 21 controls the operation of the array antenna apparatus 24 in a manner similar to that of the controller 13.

Referring to Figs. 1 and 6, the communication between the controller 11 and 13 via the controller 12 and the communication between the controllers 21 and 23 via the controller 22 are safely executed.

Referring to Fig. 2, outline of the method of measuring the RTT according to the present embodiment will next be described. Referring to Fig. 2, the source device 10 of the RTT initiator and the sink device 20 of the RTT acceptor transmit and receive a signal including a command message and a signal including a response message. The signal including the command message will be simply referred to as a command or a command message, and the signal including the response message will be simply referred to as a response or a response message hereinafter. A process for RTT verification begins at a timing t1 when the source device 10 starts a time measurement using the timer circuit 13t (See Fig. 1) and sends an RTT test command message to the source device 10. The sink device 20 receives the RTT test command message, and responds to the sink device 20 by transmitting an RTT response command message to the sink device 20. At a timing t2, the source device 10 receives the RTT response command message, and stops the time measurement using the timer circuit 13t. In addition, the source device 10 measures the RTT based on a time difference between the timing t2 and the timing t1. The source device 10 determines whether or not to authenticate the sink device 20 based on the measured RTT. For example, in the DTCP, when the measured RTT is equal to or less than 7milliseconds, the source device 10 authenticates the sink device 20 (See Fig. 4 of the Non-Patent Document 1). It is to be noted that the source device 10 and the sink device 20 may be replaced by an RTT initiator defined by a content protection specification such as the DTCP and a device authorized to be an RTT acceptor, respectively.

Next, referring to Figs. 3, 4 and 5, a method of transmitting the RTT test command and the RTT response command will be described.

In a packet communication in the wireless communication network of Fig. 1, a frame format of Fig. 4 called super frame is used. In this case, in order to perform RTT verification appropriately, the source device 10 reserves a pair of reservation periods CTBt and CTBr for transmitting the RTT test command and the RTT response command, respectively, in the super frame. As described later, the RTT measurement shall be performed if needed, even if most of the CTBs in the super frame have already been allocated for A/V streaming data such as 1080p/60 fps/24 bit color.

In the frame format of Fig. 4, super frames each having a predetermined time length Tsf are repeatedly arranged. Further, each super frame includes, in an order from the head of the super frame, a beacon period TBb in which the band management unit 28 transmits a beacon signal, a contention period RATB which is a random access time block period in which all of the devices 10 and 20 in the wireless communication network can freely transmit signals, a reservation period TBav1 which is a channel time block (referred to as a CTB hereinafter) period in which the source device 10 transmits AV data to the sink device 20, a reservation period CTBt which is a CTB period in which the source device 10 transmits the RTT test command to the sink device 20, a reservation period CTBr which is a CTB period in which the sink device 20 transmits the RTT response command to the source device 10, and a reservation period TBav2 which is a CTB period in which the source device 10 transmits AV data to the sink device 20. It is to be noted that the reservation periods CTBt and CTBr, and the reservation periods TBav1 and TBav2 are non-contention periods. In this case, the reservation periods CTBt and CTBr are allocated within a predetermined time period Tpre between the reservation periods TBav1 and TBav2, and the reservation period CTBr is allocated to be subsequent to the reservation period CTBt. In Fig. 4, the time length Tsf of each super frame is 20milliseconds, the time length of the beacon period TBb is 200 microseconds, the time length of the contention period RATB is 300 microseconds, and the time length of each of the reservation periods CTBt and CTBr is 200 microseconds, respectively.

Next, a method of reserving the reservation periods CTBt and CTBr will be described. First of all, in the contention period RATB, the controller 13 of the source device 10 generates a bandwidth request command and transmits the bandwidth request command to the band management unit 28 in the controller 21 of the sink device 20 (referred to as a band management unit 28 hereinafter) so as to request allocation of the reservation periods CTBt and CTBr and to reserve the reservation periods CTBt and CTBr. As shown in Fig. 3, the bandwidth request command includes, as parameters, a minimum schedule period (time interval) of each of the reservation periods CTBt and CTBr, a maximum schedule period (time interval) of each of the reservation periods CTBt and CTBr, a time block duration of each of the reservation periods CTBt and CTBr, and a reservation for a pair of CTBs. In response to the bandwidth request command, the band management unit 28 allocates the reservation periods CTBt and CTBr within the predetermined time period Tpre between the reservation periods TBav1 and TBav2 so that the reservation period CTBr is subsequent to the reservation period CTBt, based on the parameters included in the bandwidth request command. All the devices in the wireless communication network are notified of information on the allocated reservation periods CTBt and CTBr by the beacon signal transmitted from the sink device 20 periodically with a period of Tsf. As shown in Fig. 3, in the present embodiment, the minimum schedule period is 200 microseconds, the maximum schedule period is 200 microseconds, the time block duration is 200 microseconds, and the reservation for the pair of CTBs is "Yes".

Packets formed in the LRP mode are normally used for the RTT measurement. Referring to Fig. 3, a value of the time block duration is selected such that the measurement packets (including the packet including the RTT test command and the packet including the RTT response command) fit in the allocated reservation periods CTBt and CTBr, respectively. In addition, the minimum schedule period and the maximum schedule period may be changed as long as RTT time constraint is satisfied. For example, in the DTCP, since a device having an RTT longer than 7milliseconds is not authorized, the maximum schedule period is set to a value of, for example, 6milliseconds or less.

Referring to Fig. 4, the band management unit 28 previously retains the predetermined time period Tpre for allocating the reservation period CTBt for the RTT test command and the reservation period CTBr for the RTT response command in the super frame as free spaces. In this case, the band management unit 28 does not allocate reservation periods (the reservation periods for AV data, for example) other than the reservation periods CTBt and CTBr within the time period Tpre. In addition, in response to the bandwidth request command for requesting the reservation periods CTBt and CTBr from the source device 10, the band management unit 28 allocates the reservation periods CTBt and CTBr within the time period Tpre so that the reservation periods CTBr is subsequent to the reservation period CTBt. With this configuration, even when the reservation periods such as the reservation periods TBav1 and TBav2 for transmitting the AV data are allocated in the super frame, the RTT is measured appropriately. Namely, as compared with the prior art, it is possible to transmit the RTT test command and the RTT response command surely, and therefore, it is possible to measure the RTT surely. In addition, the band management unit 28 allocates the reservation periods TBav1 and TBav2 for transmitting the AV data before and after the time period Tpre, respectively. Therefore, as compared with the prior art, buffer capacities of the buffer memory 15m of the source device 10 and the buffer memory 26m of the sink device 20 can be minimized, and it is possible to decrease a probability of overflow and underflow of video and audio data.

It is to be noted that the band management unit 28 may allocate the reservation periods TBav1 and TBav2 for transmitting the AV data, and allocate the reservation periods CTBt and CTBr between the reservation periods TBav1 and TBav2 so that the reservation period CTBr is subsequent to the reservation period CTBt. With this configuration, the buffer capacities of the buffer memory 15m of the source device 10 and the buffer memory 26m of the sink device 20 can be minimized, and it is possible to decrease the probability of overflow and underflow of video and audio data, as compared with the prior art.

Next, referring to Fig. 5, there will be described a time length required for the packet of the RTT test command and a time length required for the packet of the RTT response command transmitted with the index 0 of the transmission mode, in the omni-directional LRP mode. It is to be noted that the packet of the RTT test command and the packet of the RTT response command packet have configurations the same as each other. In addition, the time length required for the reservation period CTBt for the packet of the RTT test command of Fig. 4 and a time length required for the reservation period CTBr for the packet of the RTT response command of Fig. 4 are the same as each other. Referring to Fig. 5, each of the packet of the RTT test command and the packet of the RTT response command includes, in an order from the head of the packet, a short preamble for the omni LRP mode (referred to as a short omni LRP preamble hereinafter) 41 having a time length of 42.4 microseconds, a header for the omni LRP mode (referred to as an omni LRP mode header hereinafter) 42 having a time length of 7.9 microseconds, an MAC header for the omni LRP mode (referred to as an omni LRP MAC header hereinafter) 43 having a time length of 25.2 microseconds, a header check sequence (referred to as a HCS hereinafter) 44 for error correction having a time length of 12.6 microseconds, a packet body 45 having a time length of d microseconds, and a packet check sequence (referred to as a PCS hereinafter) 46 having a time length of 12.6 microseconds.

Referring to Fig. 5, when the omni LRP mode the index of the transmission mode of which is 0 and which has a data transfer rate of 2.542 Mbps is used for an RTT test, the time length d of the packet body 45 is expressed by the following Equation.

[Equation 1]

$$d = 8 \times N / 2.542 (\text{micro sec onds})$$

In this case, N denotes a data amount of the packet body 45. For example, if the data amount N of the packet body 45 is 20 octets (which is a typical length of the packet body 45 including an MAC command header, a content protection header, and a payload), the time length d of the packet body 45 becomes 62.9 microseconds. Therefore, each of the time length required for the packet of the RTT test command and the time length required for the packet of the RTT response command packet becomes163.6 microseconds (= 42.4 + 7.9 + 25.2 + 12.6 + 62.9 + 12.6). Therefore, in the parameters included in the bandwidth request command (See Fig. 3), it is required to set the time block duration to be more than 163.6 microseconds. In addition, it is also required to set the maximum schedule period to be greater than 163.6 microseconds. If the time block duration is less than a sum of the time required to transmit the packet and a SIFS (Short Interframe Space) and the time for an acknowledgement (referred to as an ACK hereinafter), it is required to use No-ACK policy for the packet of the RTT test command and the packet of the RTT response command. It is to be noted that a sum of the maximum schedule period and a duration of the packet of the RTT response command in the parameters included in the bandwidth request command needs to be less than the time (for example, 7milliseconds in the DTCP) defined in RTT time constraint specified in a content protection specification in order to meet the RTT test.

Next, referring to Fig. 6, the method of measuring the RTT according to the present embodiment will be described. Referring to Fig. 6, the controller 11 of the content protection entity transmits an RTT measurement request command (MEASURE_RTT.req) for requesting the controller 13 to start measuring the RTT between the source device 10 and the sink device 20 to the controller 12. In response to this, the controller 12 of the RTT initiator transmits an RTT measurement request command (MLME_MEASURE_RTT.req) for requesting the controller 13 to start measuring the RTT between the source device 10 and the sink device 20 to the controller 13. In response to this, the controller 13 generates the above-mentioned bandwidth request command, and transmits the bandwidth request command to the sink device 20. In response to this, the band management unit 28 of the sink device 20 allocates the reservation periods CTBt and CTBr in a manner as mentioned above, and notifies all of the devices in the wireless communication network of time period designation information including the allocated reservation periods CTBt and CTBr using the beacon signal. In response to this, at a timing t11 just before the start timing of the allocated reservation period CTBt, the controller 13 starts measuring the RTT using the timer circuit 13t, generates the RTT test command, and wirelessly transmits the RTT test command to the sink device 20 in the reservation period CTBt.

On the other hand, in the sink device 20 of the RTT acceptor, the controller 23 of the content protection entity transmits an RTT response setting request command (RTT_REPLY_SET.req) for requesting the controller 21 to generate the RTT response command to the controller 22. In response to this, the controller 22 transmits an RTT response setting request command (MLME_SET_RTT_REPLY.req) for requesting the controller 21 to generate the RTT response command to the controller 21. In response to this, the controller 21 previously generates the RTT response command before the controller 21 receives the RTT test command from the source device 10. Thereafter, upon receiving the RTT test command at a timing t21, the controller 21 wirelessly transmits the generated RTT response command to the source device 10 at a timing t22 in the allocated reservation period CTBr. Further, the controller 21 transmits an RTT response setting confirmation command (MLME_SET_RTT_REPLY.cfm) for notifying the controller 23 that the RTT response command has been transmitted to the source device 10 to the controller 22. In response to this, the controller 22 transmits an RTT response setting confirmation command (RTT_REPLY_SET.cfm) for notifying the controller 23 that the RTT response command has been transmitted to the source device 10 to the controller 23.

Referring to Fig. 6, upon receiving the RTT response command from the sink device 20 at a timing t12, the controller 13 controls the wireless communication circuit 16 to perform a predetermined demodulation process and a predetermined packet processing. The wireless communication circuit 16 demodulates the received wireless signal to a digital signal, extracts the RTT response command from the digital signal, and outputs the RTT response command to the controller 13. At a timing t13, upon receiving the RTT response command, the controller 13 stops the RTT measurement using the timer circuit 13t. Further, the controller 13 calculates the RTT based on a time difference between the timing t13 and the timing t11, and transmits an RTT measurement confirmation command (MLME_MEASURE_RTT.cfm) for notifying the controller 11 of the calculated RTT to the controller 12. In response to this, the controller 12 transmits an RTT measurement confirmation command (MEASURE_RTT.cfm) for notifying the controller 11 of the calculated RTT to the controller 11. In response to this, the controller 11 performs an authentication process (See the Non-Patent Document 1) compliant with the DTCP based on the RTT measured and calculated by the controller 13.

On the other hand, after finishing measuring the RTT at the timing t13, the controller 13 wirelessly transmits a band release request command for requesting release of the reservation periods CTBt and CTBr to the controller 21 of the sink device 20 in the contention period RATB. In response to this, the band management unit 28 of the controller 21 performs a predetermined band release process for releasing the reservation periods CTBt and CTBr for RTT measurement performed by the other devices in the WVAN, and wirelessly transmits a band release notification response command notifying the source device 10 of the release of the reservation periods CTBt and CTBr to the source device 10. Further, the band management unit 28 notifies the release of the reservation periods CTBt and CTBr using the beacon signal. The band management unit 28 retains the reservation periods CTBt and CTBr for measurement of RTT between the other devices in the WVAN, and for measurement of RTT by the source device 10 for a device other than the sink device 20 in the WVAN. In this case, the band management unit 28 does not allocate reservation periods (the reservation periods for the AV data, for example) other than the reservation periods CTBt and CTBr within the retained period. Therefore, as compared with the prior art, it is possible to measure the RTT surely.

As mentioned above, the controller 13 starts measuring the RTT by activating the timer circuit 13t at the timing t11 (substantially corresponding to the start timing of the reservation period CTBt) just before the start timing of the reservation period CTBt allocated to the source device 10. Further, the controller 13 finishes measuring the RTT by stopping the timer circuit 13t at the timing t13 when the controller 13 receives the RTT response command. Further, the controller 13 calculates the RTT based on the time difference between the timing t13 and the timing t11. Therefore, MAC access delay time, which is the transmission delay time 501 and 507 included in the time RTTm measured by the RTT measurement unit 402 according to the prior art of Fig. 15 is substantially minimized to zero in the RTT measured by the method of measuring the RTT according to the present embodiment. In addition, the controller 11 of the content protection entity of the RTT initiator requests the controller 13 of the RTT initiator to request the controller 21 of the RTT acceptor to measure the RTT so as to substantially synchronize the start timing of the RTT measurement with the start timing of the reservation period CTBt. Therefore, the RTT measured by the method of measuring the RTT according to the present embodiment does not include the waiting time 502 included in the time RTTm measured by the RTT measurement unit 402 according to the prior art of Fig. 15.

In addition, in the measurement of the RTT, the RTT acceptor needs to transmit the RTT response command to the RTT initiator as soon as possible after the RTT test command has arrived to the RTT acceptor to meet a processing time constraint (for example, several milliseconds or less) of the RTT acceptor specified in a content protection specification such as the DTCP. According to the present embodiment, the reservation period CTBr in which the sink device 20 of the RTT acceptor transmits the RTT response is allocated to be adjacent to and after the reservation period CTBt in which the source device of the RTT initiator transmits the RTT test command as shown in Fig. 4, so that the sink device 20 of the RTT acceptor can response to the RTT test command quickly as compared with the prior art. With this configuration, the RTT measured by the method of measuring the RTT according to the present embodiment substantially does not include the waiting time 506 included in the time RTTm measured by the RTT measurement unit 402 according to the prior art of Fig. 15.

Further, the controller 23 of the content protection entity of the sink device 20 requests the controller 21 via the controller 22 to generate the RTT response command before receiving of the RTT test command. In response to this, the controller 21 generates the RTT response command before receiving of the RTT test command. Therefore, upon receiving the RTT test command, the controller 21 can promptly transmit the RTT response command as compared with the prior art. In addition, the RTT measured by the method of measuring the RTT according to the present embodiment substantially does not include the transmission delay time 503 and 505, and the processing time 504 included in the time RTTm measured by the RTT measurement unit 402 according to the prior art of Fig. 15. Therefore, according to the method of measuring the RTT and the wireless communication system according to the present embodiment, it is possible to measuring the RTT accurately as compared with the prior art. Accordingly, as compared with the prior art, it is possible to accurately detect devices which meet a requirement that the packet round trip time RTT between the DTCP source device and the DTCP sink device is equal to or less than 7milliseconds. In this case, the above-mentioned requirement is a constraint for transmitting content data including the contents of moving images copyrighted by the DTCP.

In the present embodiment, after releasing the reservation periods CTBt and CTBr, the band management unit 28 retains the reservation periods CTBt and CTBr for measurement of RTT between the other devices in the WVAN, and for measurement of RTT by the source device 10 for a device other than the sink device 20 in the WVAN. However, the present invention is not limited to this, and, after releasing the reservation periods CTBt and CTBr, the band management unit 28 may retain the predetermined time period Tpre for measurement of RTT between the other devices in the WVAN, and for measurement of RTT by the source device 10 for a device other than the sink device 20 in the WVAN. In addition, the predetermined time period Tpre may be used to transmit the audio and video data. In this case, in such a case where a device in the WVAN performs the RTT measurement, a time period other than the predetermined time period Tpre may be reserved for the RTT measurement, or the predetermined time period Tpre which is used for transmission of the audio and video data may be released for the RTT measurement.

SECOND EMBODIMENT

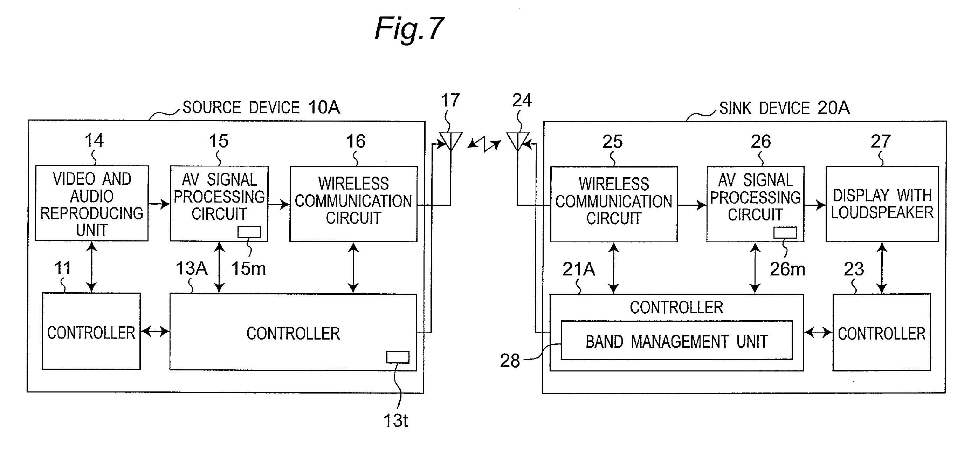

Fig. 7 is a block diagram showing a configuration of a wireless communication system for measuring the RTT using a method of measuring the RTT according to a second embodiment of the present invention. As compared with the wireless communication system according to the first embodiment of Fig. 1, the wireless communication system of Fig. 7 is characterized by having a source device 10A including a controller 13A (corresponding to the RTT initiator) instead of the controllers 12 and 13 of the source device 10, and a sink device 20A including a controller 21A (corresponding to the RTT acceptor) instead of the controllers 21 and 22 of the sink device 20.

Referring to Fig. 7, the controller 13A includes the timer circuit 13t, controls the operation of the AV signal processing circuit 15 in a manner similar to that of the controller 12, and controls the operations of the wireless communication circuit 16 and the array antenna apparatus 17 in a manner similar to that of the controller 13. Further, the controller 21A includes the band management unit 28, controls the operation of then AV signal processing circuit 26 in a manner similar to that of the controller 26, and controls the operations of the wireless communication circuit 25 and the array antenna apparatus 24 in a manner similar to that of the controller 21.

According to the method of measuring the RTT and the wireless communication system according to the present embodiment, it is possible to measure the RTT surely and accurately as compared with the prior art, in a manner similar to that of the method of measuring the RTT and the wireless communication system according to the first embodiment.

THIRD EMBODIMENT

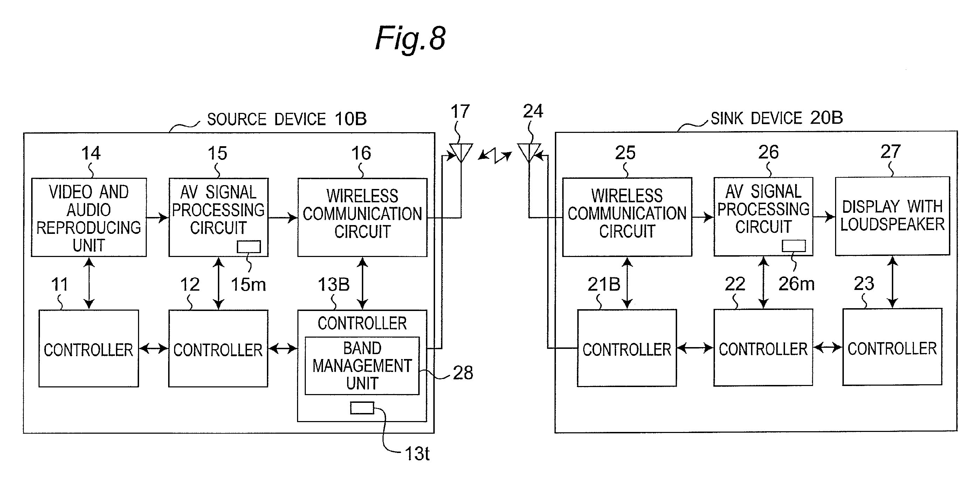

Fig. 8 is a block diagram showing a configuration of a wireless communication system for measuring the RTT using a method of measuring the RTT according to a third embodiment of the present invention. As compared with the wireless communication system according to the first embodiment of Fig. 1, the wireless communication system of Fig. 8 is characterized by providing the band management unit 28 in a source device 10B.

As compared with the wireless communication system of Fig. 1, the wireless communication system of Fig. 8 includes the source device 10B including a controller 13B in stead of the controller 13 of the source device 10, and a sink device 20B including a controller 21B in stead of the controller 21 of the sink device 20. In this case, the controller 13B of the RTT initiator includes the timer circuit 13t and the band management unit 28. The controller 13B controls the wireless communication circuit 16 and the array antenna apparatus 17 in a manner similar to that of the controller 13, and the band management unit 28 reserves the reservation periods CTBt and CTBr in a manner similar to that of the first embodiment. Further, the controller 21B of the RTT acceptor and controls the operations of the wireless communication circuit 25 and the array antenna apparatus 24 in a manner similar to that of the controller 21.

According to the method of measuring the RTT and the wireless communication system according to the present embodiment, it is possible to measure the RTT surely and accurately as compared with the prior art, in a manner similar to that of the method of measuring the RTT and the wireless communication system according to the first embodiment.

FOURTH EMBODIMENT

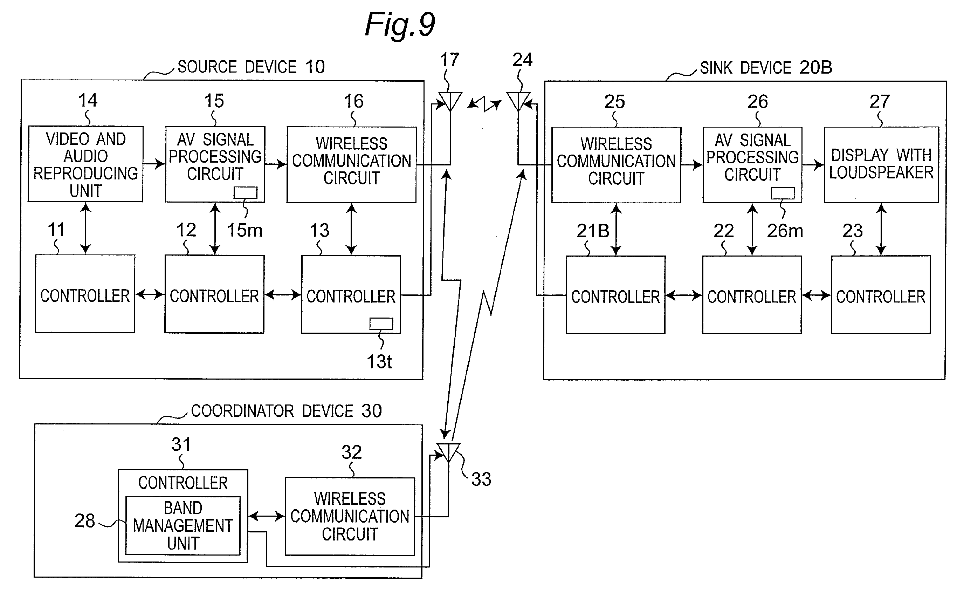

Fig. 9 is a block diagram showing a configuration of a wireless communication system for measuring the RTT using a method of measuring the RTT according to a fourth embodiment of the present invention. As compared with the wireless communication system according to the first embodiment of Fig. 1, the wireless communication system of Fig. 9 is characterized by including the source device 10, the sink device 20B (shown in Fig. 8), and a coordinator device 30.

Referring to Fig. 9, the coordinator device 30 includes a controller 31 which includes the band management unit 28, a wireless communication circuit 32, and an array antenna apparatus 33. In this case, the array antenna apparatus 33 is configured in a manner similar to that of the array antenna devices 17 and 24. The controller 31 controls operation of the wireless communication circuit 32 and, controls operation of the array antenna apparatus 33 in a manner similar to that of a controller 13. In addition, the wireless communication circuit 32 converts predetermined control commands inputted from the controller 13 into a digital signal in a predetermined packet format, digitally modulates a wireless carrier signal according to the digital signal, and wirelessly transmits the modulated wireless signal to the array antenna apparatus 17 of the source device 10 and the array antenna apparatus 24 of the sink device 20B via the array antenna apparatus 33. Further, the wireless signal transmitted from each of the array antenna apparatus 17 of the source device 10 and the array antenna apparatus 24 of the sink device 20B is received by the array antenna apparatus 33, and thereafter, inputted to the wireless communication circuit 32. The wireless communication circuit 32 demodulates the received wireless signal to a digital signal, extracts predetermined control commands from the digital signal by a predetermined packet separation process, and outputs the control commands to the controller 31.

Next, a method of reserving the reservation periods CTBt and CTBr will be described. First of all, the controller 13 of the source device 10 generates the bandwidth request command, and transmits the bandwidth request command to the band management unit 28 provided in the controller 31 of the coordinator device 30 within the contention period RATB, so as to request allocation of the reservation periods CTBt and CTBr and to reserve the reservation periods CTBt and CTBr, in a manner similar to that of the controller 13 of Fig. 1. In response to this, the band management unit 28 allocates the reservation periods CTBt and CTBr based on the parameters included in the bandwidth request command in a manner similar to that of the first embodiment. All devices in the wireless communication network are notified of the time period designation information on the allocated reservation periods CTBt and CTBr by the beacon signal transmitted periodically from the coordinator device 30 with the period of Tsf.

According to the method of measuring the RTT and the wireless communication system according to the present embodiment, it is possible to measure the RTT surely and accurately as compared with the prior art, in a manner similar to that of the method of measuring the RTT and the wireless communication system according to the first embodiment.

In the first to fourth embodiments, an antenna apparatus, directivity of which can be changed, such as an ESPAR can be used in stead of each of the array antenna apparatuses 17, 24, and 33.

FIFTH EMBODIMENT

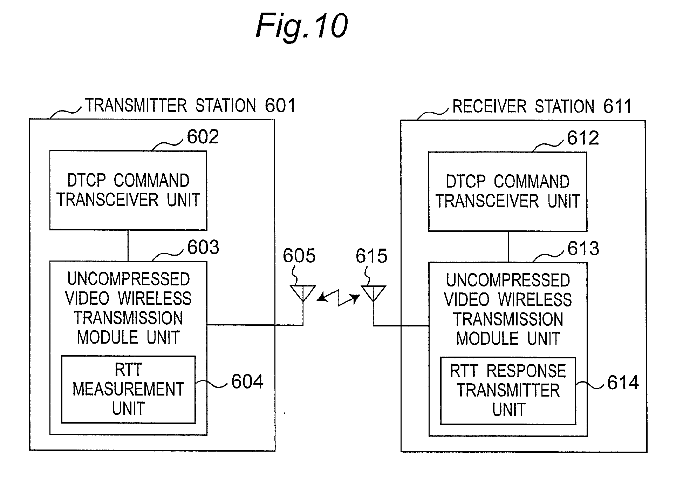

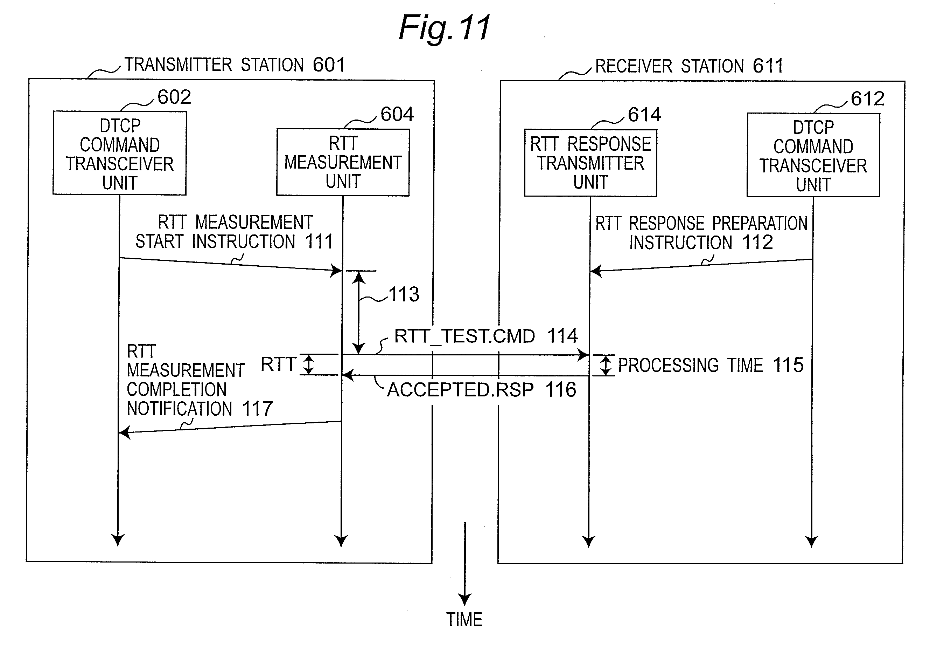

Fig. 10 is a block diagram showing a configuration of a wireless communication system for measuring the RTT using a method of measuring the RTT according to a fifth embodiment of the present invention. Fig. 11 is a sequence diagram showing an example of a message sequence for the method of measuring the RTT according to the fifth embodiment of the present invention.

Referring to Fig. 10, a wireless link is established between a transmitter station 601 and a receiver station 611. The transmitter station 601 is characterized by having a DTCP command transceiver unit 602 for transmitting and receiving a DTCP command, an uncompressed video transmission wireless module unit 603 which includes an RTT measurement unit 604, and an antenna 605. The receiver station 611 is characterized by having a DTCP command transceiver unit 612 for transmitting and receiving a DTCP command, an uncompressed video transmission wireless module 613 which includes an RTT response transmitter unit 614, and an antenna 615.

The wireless communication system according to the present embodiment is characterized by providing the RTT measurement unit 604 of the transmitter station 601 in the uncompressed video transmission wireless module unit 603 of the transmitter station 601, and by providing the RTT response transmitter unit 614 of the receiver station 611 in the uncompressed video transmission wireless module unit 613 in a manner similar to that of the RTT measurement unit 604. Therefore, since the RTT measurement unit 604 is provided in the uncompressed video module unit 603, the RTT measurement unit 604 can transmit an RTT test command (RTT_TEST.CMD) and start measuring the RTT at a timing the same as a start timing of the contention time period 303 (shown in Fig. 13) in the super frame 301 as described later. Therefore, the RTT measured by the method of measuring the RTT according to the present embodiment does not include the waiting time 502 included in the time RTTm measured by the RTT measurement unit 402 according to the prior art of Fig. 15.

Next, referring to Fig. 11, the method of measuring the RTT according to the present embodiment will be described. Fig. 11 shows a communication sequence of an RTT test command (referred to as an RTT_TEST.CMD hereinafter) 114 and an accepted response command (referred to as an ACCEPTED.RSP hereinafter) 116. In addition, it is assumed that the operation in the Challenge-Response portion defined in the AKE operation according to the DTCP is completed in Fig. 11.

Referring to Fig. 11, first of all, the DTCP command transceiver unit 602 of the transmitter station 601 transmits a command including an RTT measurement start instruction 111 to the RTT measurement unit 604. On the other hand, the DTCP command transceiver unit 612 of the receiver station 611 transmits a command including an RTT response preparation instruction 112 to the RTT response transmitter unit 614. Upon receiving the command including the RTT measurement start instruction 111, the RTT measurement unit 604 does not start measuring the RTT immediately, but waits for waiting time 113 until the MAC super frame 301 becomes the contention time period 303. When the MAC super frame 301 becomes the contention time period 303, the RTT measurement unit 604 starts measuring the RTT by transmitting the RTT_TEST.CMD 114 to the receiver station 611, and activates a timer circuit (not shown) of the RTT measurement unit 604.

In response to the RTT_TEST.CMD 114, the RTT response transmitter unit 614 performs a predetermined process requiring a processing time 115, and transmits the ACCEPTED.RSP 116 to the transmitter station 601 without transferring the received RTT_TEST.CMD 114 to the DTCP command transceiver unit 612. Upon receiving the ACCEPTED.RSP 116, the RTT measurement unit 604 stops the timer circuit, and transmits a command including an RTT measurement completion notification 117 which includes a timer value measured by the timer circuit to the DTCP command transceiver unit 602.

The DTCP command transceiver unit 602 calculates the RTT based on the timer value included in the received RTT measurement completion notification 117, and determines whether or not the RTT is equal to or less than 7milliseconds. As a result, when the RTT is equal to or less than 7milliseconds, the DTCP command transceiver unit 602 determines that the receiver station 611 is a device satisfying a condition required for the packet round trip time RTT according to the DTCP, and the process goes to a next step of an authentication process of authenticating the receiver station 611.

When the RTT is greater than 7milliseconds, the RTT is measured again. When the RTT value is not equal to or less than 7milliseconds even when the RTT is measured 1024 times, the DTCP command transceiver unit 602 determines that the receiver station 611 is a device that does not satisfy the condition required for the RTT according to the DTCP, the authentication process is finished, and the process does not go to the next step of the authentication process.

In this case, the time RTTm measured by the method of measuring the RTT according to the prior art of Fig. 15 is the time interval from the timing when the RTT measurement unit 402 transmits the RTT test command to the timing when the RTT measurement unit 402 receives the accepted response command. The time RTTm includes the delay time 501, 503, 505 and 507, the waiting time 502 and 506, and the processing time 504 as the transmission delay time in addition to the RTT defined by the DTCP. In this case, since the time length of the MAC super frame 301 is generally set to 20milliseconds, each of the waiting time 502 and 506 is often greater than 7milliseconds. In addition, the delay time 501 and 507 generated in the transmitter station 401 and the delay time 503 and 505 generated in the receiver station 405 are not included in the RTT defined by the DTCP. Therefore, the time RTTm measured by the RTT measurement unit 402 is greater than the RTT defined by the DTCP, and the time RTTm may possibly exceed, for example, 7milliseconds. In this case, the transmitter station 401 does not authenticate the receiver station 405. Therefore, according to the method of measuring the RTT according to the prior art, for example, there is such a probability that the transmitter station 401 determines that the receiver station 405 is a device disposed outside of a house although the receiver station 405 is disposed in the house, and that the content data cannot be transmitted to the receiver station 405. Namely, it is required to remove the delay time 501, 503, 505, and 507 and the waiting time 502 and 506 from the time RTTm measured by the method of measuring the RTT according to the prior art of Fig. 15.

According to the method of measuring the RTT and the wireless communication system according to the present embodiment, it is possible to measure the RTT that does not include the communication time 501, 503, 505, and 507 spent in the transmitter station 601 and the receiver station 611, since the RTT measurement unit 604 is provided in the uncompressed transmission wireless module unit 603, and the RTT response transmitter unit 614 is provided in the uncompressed video transmission wireless module unit 613. In addition, since the uncompressed video transmission wireless module unit 603 holding information on the start timing of the contention time period 303, it is possible to measure the RTT that does not include the waiting time 502 and 506 for waiting the contention time period. Namely, since the waiting time 113 in which the transmitter station 601 waits the contention time period 303 is not substantially included in the measured RTT, it is possible to greatly remove the transmission delay time added to the RTT and accurately measure the RTT as compared with the prior art. Further, by inserting a packet including the RTT_TEST.CMD 114 and a packet including the ACCEPTED.RSP 116 into one contention time period 303, the delay time added to the RTT can be removed therefrom. Therefore, according to the method of measuring the RTT according to the present embodiment, it is possible to measure the RTT accurately as compared with the prior art. Accordingly, it is possible to measure the accurate RTT value equal to or less than 7milliseconds to, for example, the device erroneously determined as the device to which the RTT is greater than 7milliseconds by the method of measuring the RTT according to the prior art.

In addition, according to the method of measuring the RTT and the wireless communication system according to the present embodiment, it is possible to reduce the communication time in the receiver station 611 since the RTT response transmitter unit 614 of the receiver station 611 does not need to transmit the received RTT_TEST.CMD 114 to the DTCP command transceiver unit 612. In addition, the RTT response transmitter unit 614 can send back the ACCEPTED.RSP 116 immediately in the contention time period 303 in which the RTT_TEST.CMD 114 is transmitted to the RTT response transmitter unit 614. It is to be noted that this contention time period 303 may be either retained only at the time of the RTT measurement or always set.

Four methods of reducing a time length of the contention time period 303 used for the RTT measurement will next be described.

The first method includes setting the packet including the RTT_TEST.CMD 114 and the packet including the ACCEPTED.RSP 116 to packets which do not require a receipt acknowledgement. Therefore, the receiver station 611 or transmitter station 601 receiving the above-mentioned packets can transmit a next packet without transmitting a receipt acknowledgement packet. Accordingly, it is possible to reduce time spent transmit the receipt acknowledgement packet in the contention time period 303.

The second method includes, in the receiver station 611 which receives the RTT_TEST.CMD 114, transmitting a receipt acknowledgement packet in response to the RTT_TEST.CMD 114 which includes information on the ACCEPTED. RSP 611. Generally speaking, although the receipt acknowledgement packet does not include any data, this method can be realized by providing a data portion in the receipt acknowledgement packet. In this case, it is also possible to reduce a back-off period and an SIFS period required until the receiver station 611 transmits the receipt acknowledgement packet in the contention time period 303.

The third method includes transmitting the RTT_TEST.CMD 114 and the ACCEPTED.RSP 116 using beam packets. In the wireless communication system according to the present embodiment, it is possible to use a directional packet (a beam-formed packet) and an omni-directional packet (an omni packet), and preamble lengths of the both packets are different from each other. Since the preamble length of the beam formed packet is shorter than that of the short omni packet, it is possible to reduce the time length of the contention time period 303 used for the RTT measurement.

The fourth method includes removing back-off waiting time generated when the RTT_TEST.CMD 114 and the ACCEPTED.RSP 116 are transmitted. Generally speaking, when a packet is transmitted in the contention time period 303, transmission waiting time (back-off period) is set. This transmission waiting time is provided for collision avoidance according to CSMA/ CA (Carrier Sense Multiple Access/ Collision Avoidance) protocol. It is designed to avoid such a case as much as possible where a plurality of stations transmit packets simultaneously and the packets collide with each other by setting this waiting time. However, by giving priorities to packets to be transmitted, this back-off period can be removed. Concretely speaking, for example, priorities of 1 to 3 are given to packets, respectively, the packet having the priority 1 is assumed as a highest priority packet, the packet having the priority 3 is assumed as a lowest priority packet, and the packet having the priority 2 is assumed as a packet having an intermediate priority between the highest and lowest priorities. Further, priorities of the packet including the RTT_TEST.CMD 114 and the packet including the ACCEPTED.RSP 116 are set to the highest priority 1. In this case, by designing the MAC so that a packet having the priority 1 can be transmitted without any back-off period, the RTT_TEST.CMD 114 and the ACCEPTED.RSP 116 can be transmitted without any back-off periods, and the time length of the contention time period 303 used for the RTT measurement can be reduced.

As mentioned above, the time length of the contention time period 303 used for the RTT measurement can be reduced, and the RTT can be measured accurately as compared with the prior art without unnecessarily extending the contention time period 303.

According to the method of measuring the RTT and the wireless communication system according to the present embodiment, it is possible to measure the RTT accurately when content data including video data copyrighted by the DTCP are transmitted using the uncompressed video transmission wireless system. Accordingly, as compared with the prior art, it is possible to accurately detect devices which meet a requirement that the packet round trip time RTT between a source device and a sink device is equal to or less than 7milliseconds. In this case, the above-mentioned requirement is a constraint for transmitting content data including the contents of moving images copyrighted by the DTCP. Therefore, the method of measuring the RTT and the wireless communication system according to the present embodiment are useful for transmitting content data copyrighted using the DTCP in the uncompressed video transmission wireless system.

In the present embodiment, communication packets related to the RTT measurement are transmitted and received in the contention time period 303. Alternatively, a non-contention time period may be reserved and used for RTT communication packets (corresponding to the packets including the RTT_TEST.CMD 114 and the packet including the ACCEPTED.RSP 116). Concretely speaking, before starting the AKE operation according to the DTCP or before measuring the RTT, the transmitter station 601 reserves a part of the non-contention time period for RTT communication packets, and transmits the RTT communication packets in the reserved non-contention time period. After finishing the measurement of the RTT or after finishing the AKE operation, the transmitter station 601 requests the coordinator device for performing the band management for the wireless communication system to release the reserved non-contention time period.

INDUSTRIAL APPLICABILITY

As described above in detail, according to the method of measuring the RTT and the wireless communication system using the same according to the present invention, the source device includes first controller means for controlling a wireless communication with the sink device, and when the first controller means measures a packet round trip time RTT to the sink device, the first controller transmits a band width request command signal for requesting allocation of bands for round trip packets to the band management means. In response to this, within a predetermined frame period, the band management means allocates a first reservation period for transmitting a first packet from the source device to the sink device and a second reservation period for sending back a second packet from the sink device to the source device, and notifies the first controller means of the first reservation period and the second reservation period. The first controller means transmits the first packet and starts measuring the packet round trip time RTT at a first timing, which is a start timing of the first reservation period, finishes measuring the packet round trip time RTT at a second timing when the first controller receives the second packet, and calculates the packet round trip time RTT based on a time difference between the first timing and the second timing. Therefore, as compared with the prior art, it is possible to measure the packet round trip time RTT accurately and surely. In particular, the present invention is applicable to RTT measurement for transmission of content data to be copyrighted in a wireless communication system compliant with the wireless communication standard such as a WirelessHD (Wireless High-Definition).

**Claims**

1. A method of measuring a packet round trip time RTT for a wireless communication system for wirelessly transmitting content data from a source device to a sink device in a form of packets, the wireless communication system comprising band management means for performing band management for wireless transmission of the packets,
wherein the source device comprises first controller means for controlling wireless communication with the sink device,
wherein, when the first controller means measures a packet round trip time RTT to the sink device, the first controller transmits a band width request command signal for requesting allocation of bands for round trip packets to the band management means,

wherein, in response to the band width request command signal, within a predetermined frame period, the band management means allocates a first reservation period for transmitting a first packet from the source device to the sink device and a second reservation period for sending back a second packet from the sink device to the source device, and notifies the first controller means of the first reservation period and the second reservation period, and wherein the first controller means transmits the first packet and starts measuring the packet round trip time RTT at a first timing, which is a start timing of the first reservation period, finishes measuring the packet round trip time RTT at a second timing when the first controller receives the second packet, and calculates the packet round trip time RTT based on a time difference between the first timing and the second timing.

2. The method of measuring the packet round trip time RTT as claimed in claim 1,
   wherein the band management means allocates a third reservation period and a fourth reservation period for transmitting the content data within the frame period, and allocates the first reservation period and the second reservation period between the third reservation period and the fourth reservation period so that the second reservation period is subsequent to the first reservation period.

3. The method of measuring the packet round trip time RTT as claimed in claim 1,
   wherein the band management means previously retains a predetermined time period for allocating the first reservation period and the second reservation period therein within the frame period, and allocates the first reservation period and the second reservation period into the predetermined time period so that the second reservation period is subsequent to the first reservation period.

4. The method of measuring the packet round trip time RTT as claimed in claim 3,
   wherein the band management means allocates a third reservation period and a fourth reservation period for transmitting the content data before and after the predetermined time period, respectively.

5. The method of measuring the packet round trip time RTT as claimed in any one of claims 1 to 4,
   wherein, after finishing measuring the packet round trip time RTT, the first controller means transmits a band release request command signal for requesting release of the first reservation period and the second reservation period to the band management means, and
   wherein, in response to the band release request command signal, the band management means releases the first reservation period and the second reservation period, and retains the released first and second reservation periods for measurement of a packet round trip time RTT between the other devices in the wireless communication system.

6. The method of measuring the packet round trip time RTT as claimed in any one of claims 1 to 5,
   wherein the sink device comprises second controller means for controlling the wireless communication with the source device, and
   wherein, in response to the first packet from the source device, the second controller means transmits the second packet to the first controller means.

7. The method of measuring the packet round trip time RTT as claimed in claim 6,
   wherein the second controller means generates the second packet before the sink device receives the first packet from the source device.

8. The method of measuring the packet round trip time RTT as claimed in any one of claims 1 to 7,
   wherein the source device further comprises third controller means for performing a predetermined copyright protection process on the content data,
   wherein the third controller means transmits an RTT measurement request command signal for requesting start of measurement of the packet round trip time RTT to the sink device to the first controller means, and
   wherein, in response to the RTT measurement request command signal, the first controller means transmits the bandwidth request command signal to the band management means.

9. The method of measuring the packet round trip time RTT as claimed in any one of claims 1 to 8,
   wherein the sink device further comprises fourth controller means for performing a predetermined copyright protection process on the content data,
   wherein the fourth controller means transmits an RTT response setting request command signal for requesting generation of the second packet to the second controller means, and
   wherein, in response to the RTT response setting request command signal, the second controller means generates the second packet.

10. A wireless communication system for wirelessly transmitting content data from a source device to a sink device in a form of packets, the wireless communication system comprising band management means for performing band management for the wireless transmission of the packets,

wherein the source device comprises first controller means for controlling wireless communication with the sink device,

wherein, when the first controller means measures a packet round trip time RTT to the sink device, the first controller transmits a band width request command signal for requesting allocation of bands for round trip packets to the band management means,

wherein, in response to the band width request command signal, within a predetermined frame period, the band management means allocates a first reservation period for transmitting a first packet from the source device to the sink device and a second reservation period for sending back a second packet from the sink device to the source device, and notifies the first controller means of the first reservation period and the second reservation period, and

wherein the first controller means transmits the first packet and starts measuring the packet round trip time RTT at a first timing, which is a start timing of the first reservation period, finishes measuring the packet round trip time RTT at a second timing when the first controller receives the second packet, and calculates the packet round trip time RTT based on a time difference between the first timing and the second timing.

11. The wireless communication system as claimed in claim 10,

wherein the band management means allocates a third reservation period and a fourth reservation period for transmitting the content data within the frame period, and allocates the first reservation period and the second reservation period between the third reservation period and the fourth reservation period so that the second reservation period is subsequent to the first reservation period.

12. The wireless communication system as claimed in claim 10,

wherein the band management means previously retains a predetermined time period for allocating the first reservation period and the second reservation period therein within the frame period, and allocates the first reservation period and the second reservation period into the predetermined time period so that the second reservation period is subsequent to the first reservation period.

13. The wireless communication system as claimed in claim 12,

wherein the band management means allocates a third reservation period and a fourth reservation period for transmitting the content data before and after the predetermined time period, respectively.

14. The wireless communication system as claimed in any one of claims 10 to 13,

wherein, after finishing measuring the packet round trip time RTT, the first controller means transmits a band release request command signal for requesting release of the first reservation period and the second reservation period to the band management means, and

wherein, in response to the band release request command signal, the band management means releases the first reservation period and the second reservation period, and retains the released first and second reservation periods for measurement of a packet round trip time RTT between the other devices in the wireless communication system.

15. The wireless communication system as claimed in any one of claims 10 to 14,

wherein the sink device comprises second controller means for controlling the wireless communication with the source device, and

wherein, in response to the first packet from the source device, the second controller means transmits the second packet to the first controller means.

16. The wireless communication system as claimed in claim 15,

wherein the second controller means generates the second packet before the sink device receives the first packet from the source device.

17. The wireless communication system as claimed in any one of claims 10 to 16,

wherein the source device further comprises third controller means for performing a predetermined copyright protection process on the content data,

wherein the third controller means transmits an RTT measurement request command signal for requesting start of measurement of the packet round trip time RTT to the sink device to the first controller means, and

wherein, in response to the RTT measurement request command signal, the first controller means transmits the bandwidth request command signal to the band management means.

18. The wireless communication system as claimed in any one of claims 10 to 17,
wherein the sink device further comprises fourth controller means for performing a predetermined copyright protection process on the content data,
wherein the fourth controller means transmits an RTT response setting request command signal for requesting generation of the second packet to the second controller means, and
wherein, in response to the RTT response setting request command signal, the second controller means generates the second packet.

# Fig.1

# Fig.2

SOURCE DEVICE 10
(RTT INITIATOR)

SINK DEVICE 20
(RTT ACCEPTOR)

t1 ⟋ RTT TEST COMMAND MESSAGE

RTT TIME

⟋ RTT RESPONSE COMMAND MESSAGE

t2

t

# Fig.3

| PARAMETERS | VALUE |
|---|---|
| MINIMUM SCHEDULE PERIOD | 200 $\mu$ s |
| MAXIMUM SCHEDULE PERIOD | 200 $\mu$ s |
| TIME BLOCK DURATION | 200 $\mu$ s |
| CTB PAIR RESERVATION | YES |

# Fig.4

EP 2 129 046 A1

## *Fig.5*

| SHORT OMNI LRP PREAMBLE 41 | OMNI LRP HEADER 42 | OMNI LRP MAC HEADER 43 | HEADER CHECK SEQUENCE (HCS) 44 | PACKET BODY 45 | PACKET CHECK SEQUENCE (PCS) 46 |
|---|---|---|---|---|---|
| 42.4 $\mu$ s | 7.9 $\mu$ s | 25.2 $\mu$ s | 12.6 $\mu$ s | d $\mu$ s | 12.6 $\mu$ s |

EP 2 129 046 A1

## Fig.6

CONTROLLER 2
(RTT INITIATOR AVC)

CONTROLLER 11
(CONTENT PROTECTION ENTITY)

CONTROLLER 13
(RTT INITIATOR MAC/MLME)

CONTROLLER 21
(RTT ACCEPTOR MAC/MLME)

CONTROLLER 22
(RTT ACCEPTOR AVC)

CONTROLLER 23
(CONTENT PROTECTION ENTITY)

t

RTT MEASUREMENT REQUEST COMMAND (MEASURE_RTT.req)

RTT MEASUREMENT REQUEST COMMAND (MLME_MEASURE_RTT.req)

BANDWIDTH REQUEST COMMAND

t11

TIME PERIOD DESIGNATION COMMAND

RTT

RTT TEST COMMAND (RTT Test command.)

t12

RTT MEASUREMENT CONFIRMATION COMMAND (MLME_MEASURE_RTT.cfm)

t13

RTT RESPONSE COMMAND (RTT Response)

t22

RTT MEASUREMENT CONFIRMATION COMMAND (MEASURE_RTT.cfm)

BAND RELEASE REQUEST COMMAND

BAND RELEASE NOTIFICATION RESPONSE COMMAND

RTT RESPONSE SETTING REQUEST COMMAND (MLME_SET_RTT_REPLY.req)

t21

RTT RESPONSE SETTING CONFIRMATION COMMAND (MLME_SET_RTT_REPLY.cfm)

RTT RESPONSE SETTING REQUEST COMMAND (RTT_REPLY_SET.req)

RTT RESPONSE SETTING CONFIRMATION COMMAND (RTT_REPLY_SET.cfm)

EP 2 129 046 A1

## Fig.7

## Fig.8

SOURCE DEVICE 10B

| 14 | 15 | 16 |
|---|---|---|
| VIDEO AND AUDIO REPRODUCING UNIT | AV SIGNAL PROCESSING CIRCUIT | WIRELESS COMMUNICATION CIRCUIT |

17   24

SINK DEVICE 20B

| 25 | 26 | 27 |
|---|---|---|
| WIRELESS COMMUNICATION CIRCUIT | AV SIGNAL PROCESSING CIRCUIT | DISPLAY WITH LOUDSPEAKER |

15m

11   12   13B

CONTROLLER

| CONTROLLER | CONTROLLER | BAND MANAGEMENT UNIT |
|---|---|---|

28

13t

21B   22   26m   23

| CONTROLLER | CONTROLLER | CONTROLLER |
|---|---|---|

EP 2 129 046 A1

## Fig.9

EP 2 129 046 A1

# Fig.10

TRANSMITTER STATION 601

602

DTCP COMMAND
TRANSCEIVER UNIT

603

UNCOMPRESSED
VIDEO WIRELESS
TRANSMISSION
MODULE UNIT

RTT
MEASUREMENT
UNIT — 604

605

RECEIVER STATION 611

612

DTCP COMMAND
TRANSCEIVER UNIT

615

613

UNCOMPRESSED
VIDEO WIRELESS
TRANSMISSION
MODULE UNIT

RTT RESPONSE
TRANSMITTER
UNIT — 614

## Fig.11

TRANSMITTER STATION 601

RECEIVER STATION 611

602
DTCP COMMAND TRANSCEIVER UNIT

604
RTT MEASUREMENT UNIT

614
RTT RESPONSE TRANSMITTER UNIT

612
DTCP COMMAND TRANSCEIVER UNIT

RTT MEASUREMENT START INSTRUCTION 111

RTT RESPONSE PREPARATION INSTRUCTION 112

113

RTT_TEST.CMD 114

RTT MEASUREMENT COMPLETION NOTIFICATION 117

RTT

PROCESSING TIME 115

ACCEPTED.RSP 116

TIME

# Fig.12

201

- 210 CONTENT REPRODUCTION AND STORAGE UNIT
- 211 DTCP ENCRYPTION UNIT
- 212 NETWORK PROCESS UNIT
- 213 MAC PROCESSING UNIT
- 216 COMMAND INFORMATION NOTIFICATION UNIT
- 214 TRANSCEIVER UNIT
- 215 AKE PROCESSING UNIT
- 217 RTT MEASUREMENT UNIT
- 218 COMMAND GENERATION UNIT
- 219 TIMER CONTROLLER UNIT
- 220 TIMER

*Fig.13*

## Fig.14

EP 2 129 046 A1

TRANSMITTER STATION 401

RECEIVER STATION 405

402

| RTT MEASUREMENT UNIT |

403

| UNCOMPRESSED VIDEO WIRELESS TRANSMISSION MODULE UNIT |

404

409

410

406

| UNCOMPRESSED VIDEO WIRELESS TRANSMISSION MODULE UNIT |

407

| RTT RESPONSE TRANSMITTER UNIT |

408

## Fig.15

402

RTT MEASUREMENT UNIT

403

UNCOMPRESSED VIDEO WIRELESS TRANSMISSION MODULE UNIT

406

UNCOMPRESSED VIDEO WIRELESS TRANSMISSION MODULE UNIT

407

RTT RESPONSE TRANSMITTER UNIT

501

RTT_TEST.CMD

502

503

PROCESSING TIME 504

RTTm

ACCEPTED.RSP

506

505

507

TIME

EP 2 129 046 A1

33

## INTERNATIONAL SEARCH REPORT

| International application No. |
|---|
| PCT/JP2008/051088 |

A.  CLASSIFICATION OF SUBJECT MATTER
*H04L12/28*(2006.01)i

According to International Patent Classification (IPC) or to both national classification and IPC

B.  FIELDS SEARCHED

Minimum documentation searched (classification system followed by classification symbols)
H04L12/28

Documentation searched other than minimum documentation to the extent that such documents are included in the fields searched
| Jitsuyo Shinan Koho | 1922-1996 | Jitsuyo Shinan Toroku Koho | 1996-2008 |
|---|---|---|---|
| Kokai Jitsuyo Shinan Koho | 1971-2008 | Toroku Jitsuyo Shinan Koho | 1994-2008 |

Electronic data base consulted during the international search (name of data base and, where practicable, search terms used)

C.  DOCUMENTS CONSIDERED TO BE RELEVANT

| Category* | Citation of document, with indication, where appropriate, of the relevant passages | Relevant to claim No. |
|---|---|---|
| A | WO 2005/43797 A2  (WARNER BROS. ENTERTAINMENT INC.),<br>12 May, 2005 (12.05.05),<br>Fig. 2<br>& JP 2007-517424 A        & US 2005/160450 A1<br>& US 7158800 B2              & KR 2007007770 A | 1-18 |
| A | JP 2006-270248 A  (Sharp Corp.),<br>05 October, 2006 (05.10.06),<br>Par. No. [0017]<br>(Family: none) | 1-18 |

| ☐ | Further documents are listed in the continuation of Box C. | ☐ | See patent family annex. |
|---|---|---|---|

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered   to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search<br>12 March, 2008 (12.03.08) | Date of mailing of the international search report<br>25 March, 2008 (25.03.08) |
|---|---|
| Name and mailing address of the ISA/<br>Japanese Patent Office | Authorized officer |
| Facsimile No. | Telephone No. |

Form PCT/ISA/210 (second sheet) (April 2007)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2006270248 A

**Non-patent literature cited in the description**

- DTCP Volume 1, Supplement E, Mapping DTCP to IP, (Information Version). Hitachi, Ltd, 28 February 2005